# EUROPEAN PATENT SPECIFICATION

(11) **EP 1 087 131 B1**
(45) Date of publication and mention of the grant of the patent: **03.12.2003**
(21) Application number: 00120554.1
(22) Date of filing: 20.09.2000
(51) Int. Cl.: F02M 55/02, F02M 63/00, F02M 63/02, F02M 59/46, F02M 61/16

(54) **Improved solenoid valve for regulating the fuel supply pressure of an internal combustion engine**
Magnetventil zum druckregelung bei einem Kraftstoffeinspritzsystem für Verbrennungskraftmaschinen
Electrovanne régulant la pression de carburant dans un système d'injection de machine à combustion interne

(30) Priority: 21.09.1999 IT TO990174 U
(43) Date of publication of application: 28.03.2001
(73) Proprietor: ROBERT BOSCH GMBH, 70442 Stuttgart (DE)
(72) Inventor: BANZHAF, Werner, 71069 Sindelfingen (DE)
(74) Representative: Jorio, Paolo

(56) References cited:
- EP-A- 0 267 162
- EP-A- 0 882 885
- DE-A- 19 800 760
- GB-A- 2 112 065
- US-A- 5 925 205

## Description

The present invention relates to an improved solenoid valve for regulating the fuel supply pressure of an internal combustion engine.

In modern engine fuel supply systems, a high-pressure pump supplies the fuel to a distributor or so-called "common rail" which supplies the various engine cylinder injectors; and the fuel pressure in the distributor is normally controlled and maintained constant by means of a solenoid valve controlled by a pressure sensor to drain any surplus fuel supplied by the high-pressure pump back into the tank. The solenoid valve comprises a feed conduit communicating with the delivery conduit of the high-pressure pump; and a shutter controlled by an electromagnet and cooperating with a seat in the feed conduit.

In one known pressure regulating solenoid valve incorporated in a radial-piston pump, the shutter is defined by a ball controlled by the end of a stem on the electromagnet armature, and which cooperates with a conical sealing seat at one end of the feed conduit.

On account of dirt, e.g. metal particles, between the ball and the conical sealing seat, the above solenoid valve is subject to sealing problems resulting in a fall in pressure and, hence, malfunctioning of the supply system. And, on account of very high operating pressure involved, e.g. around 1400 bar, ordinary filtration means inserted inside the feed conduit also result in a fall in pressure in the feed conduit.

From document EP-A-0 882 885, it is known a fuel injecting system for an internal combustion engine, wherein a number of injectors are supplied with fuel in pressure of a common container. Therein, a solenoid valve is provided in a return conduit connected to the container for returning the exceeding fuel to a tank. A filter is provided between the container and the return valve and can be integrated either with the return valve and with the container.

From document EP-A-0 267 162, it is also known a pressure-regulating solenoid valve for a high-pressure circuit of fuel injection systems of internal combustion engines, wherein a valve body is provided with a feed conduit and with a set of discharge radial passages. The communication between the feed conduit and the radial passages is controlled by a shutter ball located between a seat on the feed conduit and the radial passages. No filtering means are associated with this fuel pressure-regulating valve.

It is an object of the present invention to provide an extremely straightforward, reliable pressure regulating solenoid valve designed to eliminate the aforementioned drawbacks typically associated with known sealing valves.

According to the present invention, there is provided a solenoid valve for regulating the fuel supply pressure of an internal combustion engine, comprising an electromagnet, a valve body fitted to a body of said electromagnet, said valve body having a cylindrical portion provided with a feed conduit adapted to be feed with fuel having a pressure over 1000 bar, said cylindrical portion having radial holes communicating with a discharge conduit, said feed conduit extending axially inside said cylindrical portion and including at one end a calibrated-diameter portion terminating with a valve conical seat, a ball shutter housed between said radial holes and said valve conical seat, said ball shutter cooperating with a stem of an armature controlled by said electromagnet, characterized in that said feed conduit is fitted at another end with a filtering metal plate to prevent particles of dirt from getting between said valve conical seat and said ball shutter, with no excessive reduction in fuel pressure, said metal plate being about 1 mm thick and having a number of at least 200 holes, each of less than 0.25 mm in diameter.

A preferred non-limiting embodiment of the invention will be described by way of example with reference to the accompanying drawings, in which:
Figure 1 shows a partially sectioned view of a fuel pressure regulating solenoid valve in accordance with the present invention;
Figure 2 shows a larger-scale detail of Figure 1.

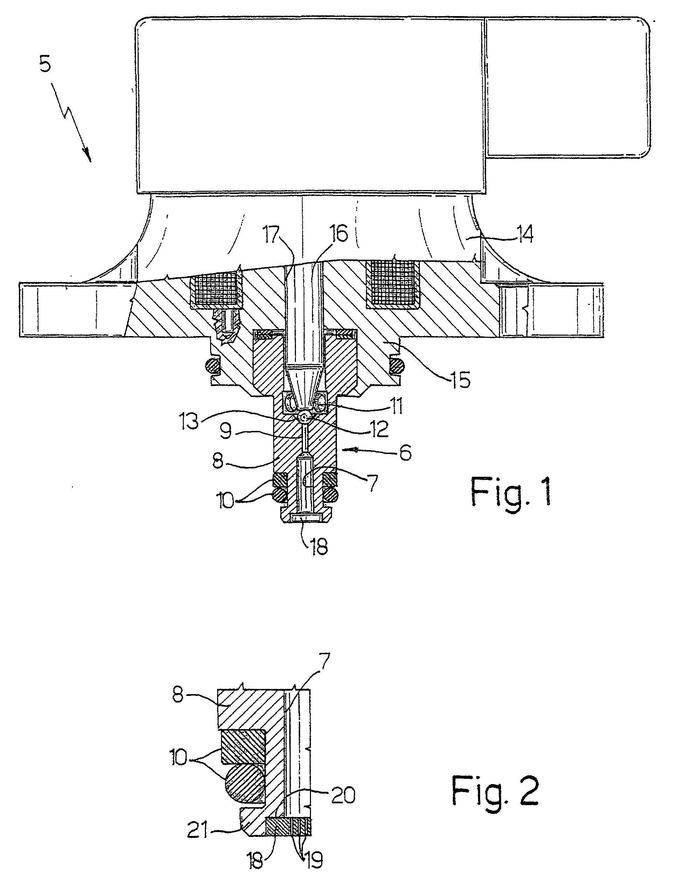

Number 5 in Figure 1 indicates as a whole a solenoid valve for regulating the fuel supply pressure of an internal combustion engine. Solenoid valve 5 comprises a valve body 6 having a feed conduit 7 extending axially inside a first cylindrical portion 8 of valve body 6; feed conduit 7 comprises a calibrated-diameter portion 9 and communicates with the delivery side of a high-pressure fuel supply pump not shown; and cylindrical portion 8 is fitted in fluidtight manner to the body of the pump by means of appropriate seals 10.

Cylindrical portion 8 has a number of radial holes 11 communicating with a discharge conduit (not shown) in the pump body; a shutter in the form of a ball 12 is located between feed conduit 7 and radial holes 11, and engages a conical seat 13, formed on the end of portion 9, to close conduit 7; solenoid valve 5 comprises an electromagnet 14 having a body 15 to which valve body 6 is fitted in known manner; and electromagnet 14 controls an armature having a stem 16 sliding inside a hole 17 in body 15 and controlling ball 12.

The fuel pressure in feed conduit 7 must be kept at an operating pressure of at least 1000 bar; the operating pressure preferably selected is about 1400 bar; and the inside diameter of conduit 7 may advantageously be about 2.5 mm.

According to the invention, feed conduit 7 is provided with fuel filtering means, i.e. a filter comprising a metal plate 18 having a number of holes 19 (Figure 2); and plate 18 is inserted and fixed in known manner inside a seat defined by a shoulder 20 at the end 21 of conduit 7 opposite conical seat 13.

Perforated plate 18 prevents particles of dirt - normally small particles of metal - from getting between conical seat 13 and ball 12, and so safeguards solenoid valve 5 against sealing problems which may lower the fuel pressure in conduit 7 to the extent of impairing operation of the fuel supply system. At the same time, however, perforated plate 18 must be such as not to produce an excessive fall in fuel pressure in conduit 7, and to prevent hydraulic cavitation erosion phenomena.

For which purpose, plate 18 must comprise at least 200 holes, and each hole 19 must be less than 0.25 mm in diameter. Preferably, plate 18 may be made of high tensile steel, and may be about 1 mm thick. Holes 19 may be about 0.1 mm in diameter and about 500 in number; and such a number of very small diameter holes 19 may be formed using a known laser drilling device.

In perforated plate 18, the ratio between the length of holes 19 and the total passage section is such as to prevent an excessive fall in pressure, and the ratio between the total passage section of holes 19 and the passage section between ball 12 and conical seat 13 of solenoid valve 5 is such as to prevent constriction along the fuel conduit.

The advantages, with respect to known solenoid valves, of solenoid valve 5 according to the invention will be clear from the foregoing description. That is, filter 18, 19 in feed conduit 7, on the one hand, ensures efficient sealing of ball 12 inside conical seat 13 with no excessive loss in pressure, and, on the other, prevents cavitation erosion phenomena in conical seat 13.

Clearly, changes may be made to the solenoid valve as described herein without, however, departing from the scope of the accompanying Claims. For example, the filter may be a different type, may comprise more than one perforated plate, and may be located anywhere along conduit 7.

## Claims

1. A solenoid valve for regulating the fuel supply pressure of an internal combustion engine, comprising an electromagnet (14), a valve body (6) fitted to a body (15) of said electromagnet (14), said valve body (6) having a cylindrical portion (8) provided with a feed conduit (7) adapted to be feed with fuel having a pressure over 1000 bar, said cylindrical portion (8) having radial holes (11) communicating with a discharge conduit, said feed conduit (7) extending axially inside said cylindrical portion (8) and including at one end a calibrated-diameter portion (9) terminating with a valve conical seat (13), a ball shutter (12) housed between said radial holes (11) and said valve conical seat (13), said ball shutter (12) cooperating with a stem (16) of an armature controlled by said electromagnet (14), **characterized in that** said cylindrical portion (8) is fitted at the other end (21) of said feed conduit (7) with a filtering metal plate (18) to prevent particles of dirt from getting between said valve conical seat (13) and said ball shutter (12), with no excessive reduction in fuel pressure, said metal plate (18) being about 1 mm thick and having a number of at least 200 holes (19), each of less than 0.25 mm in diameter.

2. A solenoid valve as claimed in Claim 1, **characterized in that** said fuel pressure is about 1400 bar.

3. A device as claimed in Claim 1 or 2, **characterized in that** said plate (18) is housed inside a seat defined by a shoulder (20) in said cylindrical portion (8) of said other end (21) of said feed conduit (7).

4. A solenoid valve as claimed in any of the previous Claims, **characterized in that** said cylindrical portion (8) is fitted in fluidtight manner to a high pressure pump body by means of seals (10).

5. A solenoid valve as claimed in any previous Claim, **characterized in that** said conduit (7) has an inside diameter of about 2.5 mm; and **in that** said plate (18) comprises about 500 holes (19); each of said holes (19) being about 0.1 mm in diameter.

6. A solenoid valve as claimed in Claim 5, **characterized in that** said holes (19) are formed using laser technology.

## Patentansprüche

1. Magnetventil zum Regulieren des Kraftstoffzufuhrdrucks einer Brennkraftmaschine, das folgendes aufweist: einen Elektromagneten (14), einen Ventilkörper (6), der an einem Körper (15) des Elektromagneten (14) angebracht ist, wobei der Ventilkörper (6) einen zylindrischen Bereich (8) hat, der mit einer Zuführleitung (7) versehen ist, die so ausgebildet ist, daß ihr Kraftstoff mit einem Druck von mehr als 1000 bar zugeführt wird, wobei der zylindrische Bereich (8) radiale Löcher (11) hat, die mit einer Abgabeleitung in Verbindung stehen, wobei sich die Zuführleitung (7) in Axialrichtung im Inneren des zylindrischen Bereichs (8) erstreckt und an dem einen Ende einen Bereich (9) mit kalibriertem Durchmesser hat, der mit einem konischen Ventilsitz (13) abschließt, einen Kugelverschluß (12), der zwischen den radialen Löchern (11) und dem konischen Ventilsitz (13) aufgenommen ist, wobei der Kugelverschluß (12) mit einem Schaft (16) eines von dem Elektromagneten (14) gesteuerten Ankers zusammenwirkt, **dadurch gekennzeichnet, daß** der zylindrische Bereich (8) an dem anderen Ende (21) der Zuführleitung (7) mit einer metallischen Filterplatte (18) angebracht ist, die ohne übermäßige Reduzierung des Kraftstoffdrucks verhindert, daß Schmutzpartikel zwischen den konischen Ventilsitz (13) und den Kugelverschluß (12) gelangen, wobei die Metallplatte (18) ungefähr 1 mm dick ist und mindestens 200 Löcher (19) hat, von denen jedes einen Durchmesser von weniger als 0,25 mm hat.

2. Magnetventil nach Anspruch 1, **dadurch gekennzeichnet, daß** der Kraftstöffdruck ungefähr 1400 bar ist.

3. Magnetventil nach Anspruch 1 oder 2, **dadurch gekennzeichnet, daß** die Platte (18) im Inneren des Sitzes aufgenommen ist, der von einer Schulter (20) in dem zylindrischen Bereich (8) des anderen Endes (21) der Zuführleitung (7) definiert ist.

4. Magnetventil nach einem der vorhergehenden Ansprüche, **dadurch gekennzeichnet, daß** der zylindrische Bereich (8) fluiddicht an einem Hochdruckpumpenkörper mittels Dichtungen (10) angebracht ist.

5. Magnetventil nach einem der vorhergehenden Ansprüche, **dadurch gekennzeichnet, daß** die Leitung (7) einen Innendurchmesser von ungefähr 2,5 mm hat; und daß die Platte (18) ungefähr 500 Löcher (19) aufweist; wobei jedes Loch (19) einen Durchmesser von ungefähr 0,1 mm hat.

6. Magnetventil nach Anspruch 5, **dadurch gekennzeichnet, daß** die Löcher unter Anwendung von Lasertechnologie gebildet sind.

## Revendications

1. Electrovanne régulant la pression d'alimentation du carburant d'un moteur à combustion interne, comprenant un électroaimant (14), un corps de vanne (6) adapté à un corps (15) dudit électroaimant (14), ledit corps de vanne (6) ayant une partie cylindrique (8) munie d'un conduit (7) d'alimentation adapté pour être alimenté avec du carburant arrivant sous une pression supérieure à 1000 bar, ladite partie cylindrique (8) ayant des trous (11) radiaux communiquant avec un conduit de refoulexnent, ledit conduit (7) d'alimentation s'étendant axialement à l'intérieur de ladite partie (8) cylindrique et comprenant à une extrémité une partie de diamètre calibré (9) se terminant par le siège conique de la vanne (13), une bille de fermeture (12) logée entre lesdits trous radiaux (11) et ledit siège conique de vanne, ladite bille de fermeture (12) coopérant avec une tige (16) de manoeuvre de l'armature commandée par ledit électroaimant (14), **caractérisée en ce que** ladite partie cylindrique (8) est pourvue à l'autre extrémité (21) dudit conduit d'alimentation (7) d'une lame métallique filtrante (18) pour empêcher les impuretés de pénétrer entre ledit siège (13) conique de la vanne et ladite bille de fermeture (12), sans une réduction excessive de la pression du carburant, ladite lame de métal (18) ayant une épaisseur d'environ 1 mm et ayant au moins 200 trous (19), ayant chacun un diamètre inférieur à 0,25 mm.

2. Electrovanne selon la revendication 1, **caractérisée en ce que** ladite pression en carburant est d'environ 1400 bar.

3. Appareil selon les revendications 1 ou 2, **caractérisé en ce que** ladite lame (18) est logée dans un siège défini par un épaulement (20) dans ladite partie cylindrique (8) de ladite autre extrémité (21) dudit conduit (7) d'alimentation.

4. Electrovanne selon l'une quelconque des revendications précédentes, **caractérisée en ce que** ladite partie (8) cylindrique est ajustée de manière étanche au corps de la pompe haute pression au moyen de joints (10).

5. Electrovanne selon l'une quelconque des revendications précédentes, **caractérisée en ce que** ledit conduit (7) a un diamètre interne d'environ 2,5 mm ; et **en ce que** ladite lame (16) comprend environ 500 trous (19) ; chacun desdits trous (19) ayant un diamètre d'environ 0,1 mm.

6. Electrovanne selon la revendication 5, **caractérisée en ce que** lesdits trous (19) sont formés en utilisant la technique du laser.
